# EUROPÄISCHE PATENTANMELDUNG

(11) **EP 2 033 986 A1**
(43) Veröffentlichungstag der Anmeldung: **11.03.2009**
(21) Anmeldenummer: 07405266.3
(22) Anmeldetag: 03.09.2007
(51) Int. Cl.: C08J 7/04, B65D 1/02

(54) **Verpackungsteil und Verfahren zu seiner Herstellung**

(71) Anmelder: Alcan Technology & Management Ltd., 8212 Neuhausen am Rheinfall (CH)
(72) Erfinder: Dippel, Markus, 8192 Glattfelden (CH); Lohwasser, Wolfgang, 78262 Gailingen (DE); Hoffmann, Manfred, 78224 Singen (DE); Wisard, André, 8194 Hüntwangen (CH)

(57) **Zusammenfassung**

Bei einem aus Kunststoff geformten Verpackungsteil mit guter Durchtrittssperrwirkung gegen Wasserdampf und Gase ist das Verpackungsteil mit einer mit Materialien mit der gewünschten Durchtrittssperrwirkung im Vakuum erzeugten Barriereschicht versehen. Die Vakuumbeschichtung ist zum Schutz gegen Abrasion und Korrosion und zur Verbesserung der mechanischen Stabilität überlackiert.

## Beschreibung

Die Erfindung betrifft ein Verpackungsteil aus geformtem Kunststoff, mit guter Durchtrittssperrwirkung gegen Wasserdampf und Gase, welches Verpackungsteil mit einer mit Materialien mit der gewünschten Durchtrittssperrwirkung im Vakuum erzeugten Barriereschicht versehen ist. Im Rahmen der Erfindung liegt auch ein zur Herstellung des Verpackungsteils geeignetes Verfahren.

Schon lange werden Lebensmittel in Verpackungen aus Glas oder Aluminium verpackt. Beide Materialien bieten einen hundertprozentigen Schutz gegen den Durchtritt von Gasen und Wasserdampf. Dies bedeutet, dass keine Gase von aussen nach innen die Wand der Verpackung durchdringen können, was das Lebensmittel vor dem Verderben schützt. Gleichzeitig können auch keine Gase von innen nach aussen gelangen, was das Produkt vor Aromaverlust und Austrocknung schützt.

Beide Verpackungen sind vom ökologischen Standpunkt her nicht optimal und bieten hinsichtlich der Gestaltung der Verpackungsform wenig Freiheitsgrade. Aluminium hat den Nachteil, dass hieraus keine transparenten Verpackungen hergestellt werden können, und Glasverpackungen haben - neben dem hohen Eigengewicht - den Nachteil, dass immer mit Splittern oder Glasbruch gerechnet werden muss. Hier bieten Verpackungen aus Kunststoff deutliche Vorteile. Da Kunststoffe in der Regel selber nur eine unzureichende Gassperrwirkung aufweisen, müssen entsprechende Verpackungen mit einer zusätzlichen Sperrschicht versehen werden. Hierzu kennt man verschiedene Möglichkeiten:
Ein Beispiel ist das Thermoformen mehrschichtiger Flachfolien, die im Inneren eine Sauerstoffsperrschicht, z.B. aus EVOH, enthalten. Mit dieser Technologie können transparente Barriereverpackungen realisiert werden. Allerdings haben diese Verpackungen den Nachteil, dass sie aufgrund des Thermoformvorganges in ihrer Gestaltungsfreiheit sehr eingeschränkt sind. Zudem ist bekannt, dass bei einem etwaigen Sterilisationsvorgang (der gefüllten Verpackung) die durch das EVOH vermittelte Gasbarriere zwischenzeitlich zusammenbricht, was während einer gewissen Zeitdauer den Zutritt von Sauerstoff durch die Wand der Verpackung in das Lebensmittel ermöglicht. Ganz analoge Einschränkungen gelten für "flaschenartige" Behälter mit EVOH-Sperrschichten, die durch eine Kombination von Spritzguss und Blasformen (injection blowmolding) oder Extrusion und Blasformen (extrusion blowmolding) erzeugt werden können.

Eine weitere Realisierungsmöglichkeit sind Behälter mit integriertem "inmoldlabel", bei deren Herstellung eine Folie mit der gewünschten Barriere in eine Spritzgussform eingesetzt und anschliessend mit Kunststoff hinterspritzt wird. Auch hier ist aber die Formfreiheit der resultierenden Behälter durch den Herstellungsprozess sehr stark eingeschränkt.

In EP-B-1 048 746 ist ausserdem die Herstellung von Behältern mit Barrierewirkung mittels Vakuumbeschichtung beschrieben. Die Herstellung einer Barriereverpackung erfolgt dort durch Formen des Behälters (Spritzgiessen, Thermoformen, Blasformen) und anschliessendes Vakuumbeschichten mit einer Barriereschicht aus einem hierfür geeigneten Material. Die Verpackung wird mittels einer flexiblen Barrierefolie als Deckelfolie verschlossen.

Die so hergestellten Kunststoff-Barriereverpackungen sind noch nicht optimal hinsichtlich folgender Gesichtspunkte:
- Oftmals wird durch die reine Vakuumbeschichtung allein noch nicht die Barrierewirkung erreicht, die aufgrund der vom Kunden vorgegebenen Haltbarkeit des Lebensmittels benötigt wird.
- Die extrem dünne Vakuumbeschichtung ist anfällig gegen mechanische Abrasion sowie Korrosion, was z.B. bei dem zum automatisierten Abfüllen notwendigen Handling zum Verlust der Barrierewirkung führen kann.
- Im Hinblick auf Sterilisationsanwendungen der Verpackung zeigen die meisten reinen Vakuumbeschichtungen nicht die erforderliche Stabilität.
- Durch Verwendung einer flexiblen Barrierefolie als Deckel-Siegelfolie kann die Verpackung nach dem erstmaligen Öffnen nicht oder nur ungenügend wiederverschlossen werden.

Der Erfindung liegt deshalb die Aufgabe zugrunde, ein Verpackungsteil der eingangs genannten Art so weiterzubilden, dass es die Verpackungsteilen wie Behältern und Verschlussdeckeln nach dem Stand der Technik anhaftenden Nachteile nicht aufweist.

Zur erfindungsgemässen Lösung der Aufgabe führt, dass die Vakuumbeschichtung zum Schutz gegen Abrasion und Korrosion und zur Verbesserung der mechanischen Stabilität überlackiert ist.

Das Formen des Verpackungsteils kann durch Thermoformen von Flachfolienmaterial, durch Spritzgiessen oder durch eine Kombination von Spritzguss und Blasformen (injection blowmolding) oder Extrusion und Blasformen (extrusion blowmolding) erfolgen.

Die Vakuumbeschichtung kann mit einem der nachstehend angeführten Verfahren erfolgen:
- Beschichten mittels Plasma-CVD mit keramischen Schichten, bevorzugt durch PECVD (Plasma Enhanced Chemical Vapour Deposition)-Verfahren mit HMDSO (Hexamethyldisiloxan) oder TEOS (Tetraethoxysilan) und besonders bevorzugt mit Plasma-Vorbehandlung mit HMDSO und Sauerstoff, HMDSO und Stickstoff, TEOS und Sauerstoff oder TEOS und Stickstoff.
- Beschichten mittels DC-, AC- oder RF-Sputterverfahren, mit oxidischen oder nitridischen oder sulfidischen Schichten, bevorzugt mittels DC-Sputtern, wie folgt:
   o Im nichtreaktiven Modus, ausgehend vom Oxid-, Sulfid oder Nitrid-Target. Bevorzugt ist dabei das DC-Sputtern von elektrisch leitfähigen Keramiktargets, wie dotiertes Zinkoxid. Alternativ kann die Beschichtung auch mit RF-Sputtern von nicht leitfähigen Keramiktargets erfolgen.
   o Im reaktiven Modus (wie z.B. Zinnoxid, Titanoxid), ausgehend vom Metalltarget unter Zugabe von Sauerstoff und oder Stickstoff mittels AC- oder DC-Sputtern.
- Beschichten mittels Sputterverfahren, mit metallischen Schichten aus Aluminium, Stahl, Kupfer, Zinn, Zink, Silber oder Mischungen davon, für Nicht-Sterilisationsanwendungen bevorzugt aus Aluminium, für Sterilisationsanwendungen bevorzugt aus Silber, Stahl, Zinn oder Zink.

Die Überlackierung des vakuumbeschichteten Verpackungsteils erfolgt beispielsweise durch Tauchlackieren, Flutlackieren, Giesslackieren, Spritzlackieren, Tampondruck oder mittels Inkjet. Zur Verringerung der aufgebrachten Lackdicke bzw. zur besseren Verteilung des Lackes auf dem Verpackungsteil kann dem Lackiervorgang ein Abschleudervorgang nachfolgen.

Als Überlacke geeignet sind allgemein Lacksysteme auf Basis von natürlichen Bindemitteln, Polykondensationsharzen, Polyadditionsharzen, Polymerisationsharzen oder sonstigen Bindemitteln, wie z. B. Sol-Gel-Lacke, Silicate und Silicone. Die Bindemittel können auch mit verschiedenen Vernetzerharzen, wie z. B. Isocyanaten, Melamin- oder Harnstoffharzen, Silanen oder Metallalkoxiden, vernetzt werden.

Insbesondere zur Verbesserung der Sauerstoffbarriereeigenschaften werden Lacke auf Basis von EVOH, PVDC, kationisch oder radikalisch UV-härtende Lacke oder Sol-Gel-Lacke auf Basis von Alkoxysilanen und/oder Metallalkoxiden und/oder anorganischen Partikeln bevorzugt. Diese Lacke können auch mit verschiedenen Vernetzerharzen, wie z. B. Isocyanaten, Melamin- oder Harnstoffharzen, Silanen oder Metallalkoxiden vernetzt werden.

Lacke, welche zusätzlich zur Sauerstoffbarriere auch sterilisationsbeständige Eigenschaften aufweisen, sind wiederum insbesondere Lacke auf Basis von EVOH, PVDC, kationisch oder radikalisch UV-härtende Lacke oder Sol-Gel-Lacke auf Basis von Alkoxysilanen und/oder Metallalkoxiden und/oder anorganischen Partikeln. Auch diese Lacke können mit verschiedenen Vernetzerharzen, wie z. B. Isocyanaten, Melamin- oder Harnstoffharzen, Silanen oder Metallalkoxiden vernetzt werden.

Besonders bevorzugt sind Sol-Gel-Lacksysteme und UV-härtende Lacke auf Basis von Acrylaten oder kationisch vernetzenden Epoxiden. Die Aushärtung erfolgt thermisch oder durch Strahlenhärtung. Besonders bevorzugt ist die Härtung durch UV-Licht oder Elektronenstrahlen.

Verpackungsteile können beispielsweise in Form eines Behälters zur Aufnahme eines Füllgutes und/oder eines Verschlusses für einen Behälter vorliegen.

Das Beschichten und Überlackieren des Behälters und gegebenenfalls des Verschlusses kann auf der Innen- oder Aussenseite durchgeführt werden. Die aussenseitige Beschichtung ermöglicht beispielsweise das Aufbringen der Barriereschicht und der Überlackschicht auf die bereits gefüllte und verschlossene Packung.

Eine erfindungsgemäss hergestellte Barriereverpackung mit einem Behälter zur Aufnahme eines Füllgut kann beispielsweise wie folgt verschlossen werden:
- mittels einer flexiblen Folie mit Sperrwirkung, die auf den Behälter gesiegelt wird, oder
- mit einem Stülp-, Schnapp- oder Klappdeckel oder mit einem Schraubverschluss, der aus Metall oder Kunststoff bestehen kann. Für den Fall, dass der Schraubverschluss aus Kunststoff besteht und damit eine ungenügende Barrierewirkung aufweist, kann er, wie vorgehend beschrieben, durch eine Kombination aus Vakuumbeschichtung und Überlackierung mit einer entsprechenden Gasbarriere versehen werden.

Erfindungsgemässe Verpackungsteile können auch Verschlüsse von Verpackungen aus Glas, Karton oder anderen Materialien sein, wie z. B. Deckel für Glasflaschen, Schraubdeckel für Getränkekartons etc.

Das erfindungsgemässe Verfahren ermöglicht die Herstellung von Verpackungsteilen aus einer grossen Anzahl von Ausgangsmaterialien. Zweckmässig sind vor allem transparente Kunststoffe mit guten Umformeigenschaften wie Polyethylen (PE), Polypropylen (PP), Cycloolefincopolymer (COC), Cycloolefinpolymer (COP), Polyvinylchlorid (PVC), Polyethylenterephthalat (PET), Polyamid (PA) sowie aus den genannten Werkstoffen hergestellte Laminate.

Bei einer besonders bevorzugten Ausgestaltung des erfindungsgemässen Verfahrens werden die Herstellung der Verpackungsteile, das Beschichten und das Überlackieren in einer Linie durchgeführt.

Aus den nachstehenden Tabellen ist der Einfluss der Barriereschicht und verschiedener Überlacksysteme auf die Sauerstoffbarriere von Verpackungsteilen vor und nach einer Sterilisationsbehandlung ersichtlicht.

Tabelle 1 zeigt die Barrierewirkung von Verpackungsteilen aus Polypropylen (PP) unbeschichtet und beschichtet mit Silber (Ag), Stahl (V2A) und Zinn (Sn), ohne Überlackschicht.

Tabelle 2 zeigt die Barrierewirkung von Verpackungsteilen aus Polypropylen (PP) beschichtet mit Silber (Ag) und Stahl (V2A), mit einer Überlackschicht aus unterschiedlichen Lacksystemen.

**Tabelle 1: Sauerstoffbarriere bei 25°C und 50% rH in cm³/(m² 24h bar), Einfluss der anorganischen Barriereschicht**

| **Verpackungsmaterial** | **vor Sterilisation** | **nach Sterilisation bei 121°C / 30 min** |
|---|---|---|
| PP unbeschichtet | 500 | 500 |
| PP / Ag | 15 | 75 |
| PP / V2A | 30 | 370 |
| PP / Sn | 36 | 350 |

**Tabelle 2: Sauerstoffbarriere bei 25°C und 50% rH in cm³/(m² 24h bar), Einfluss der zusätzlichen Überlackierung**

| **Verpackungsmaterial** | **vor Sterilisation** | **nach Sterilisation bei 121°C / 30 min** |
|---|---|---|
| PP / Ag / Lack 1 | 0.5 | 0.98 |
| PP / Ag / Lack 2 | 9.4 | 28 |
| PP / Ag / Lack 3 | 1.1 | 2.3 |
| PP / V2A / Lack 1 | 0.4 | 6.2 |
| PP / V2A / Lack 2 | 31 | 210 |
| PP / V2A / Lack 3 | 3.1 | 6.4 |

| | | |
|---|---|---|
| Lack 1 = 100% UV-System (lösemittelfrei), kationisch härtend Lack 2 = 100% UV-system (lösemittelfrei), radikalisch härtend Lack 3 = thermisch härtendes (lösemittelhaltiges) Sol-Gel-System | | |

Aus den Tabellen ist der positive Effekt einer zusätzlichen Überlackierung einer anorganischen Barriereschicht deutlich erkennbar.

## Patentansprüche

1. Verpackungsteil aus geformtem Kunststoff, mit einer anorganischen Barriereschicht mit guter Durchtrittssperrwirkung gegen Wasserdampf und Gase, welches Verpackungsteil mit einer mit Materialien mit der gewünschten Durchtrittssperrwirkung im Vakuum erzeugten Beschichtung versehen ist,
**dadurch gekennzeichnet, dass**
die Vakuumbeschichtung zum Schutz gegen Abrasion und Korrosion und zur Verbesserung der mechanischen Stabilität überlackiert ist.

2. Verpackungsteil nach Anspruch 1, **dadurch gekennzeichnet, dass** die Dicke der Überlackschicht 1 bis 30 µm, vorzugsweise 1 bis 5 µm, beträgt.

3. Verpackungsteil nach Anspruch 1 oder 2, **dadurch gekennzeichnet, dass** das Verpackungsteil aus Polyethylen (PE), Polypropylen (PP), Cycloolefincopolymer (COC), Cycloolefinpolymer (COP), Polyvinylchlorid (PVC), Polyethylenterephthalat (PET), Polyamid (PA) oder aus den genannten Werkstoffen hergestellten Laminaten geformt ist.

4. Verpackungsteil nach einem der Ansprüche 1 bis 3, **dadurch gekennzeichnet, dass** das Verpackungsteil durch Thermoformen von Flachfolienmaterial, durch Spritzgiessen oder durch eine Kombination von Spritzguss und Blasformen (injection blowmolding) oder Extrusion und Blasformen (extrusion blowmolding) geformt ist.

5. Verpackungsteil nach einem der Ansprüche 1 bis 4, **dadurch gekennzeichnet, dass** die Barriereschicht aus einer mittels Plasma-CVD, bevorzugt durch PECVD (Plasma Enhanced Chemical Vapour Deposition) mit HMDSO (Hexamethyldisiloxan) oder TEOS (Tetraethoxysilan), insbesondere mit Plasma-Vorbehandlung mit HMDSO und Sauerstoff, HMDSO und Stickstoff, TEOS und Sauerstoff oder TEOS und Stickstoff, erzeugten keramischen Schicht besteht.

6. Verpackungsteil nach einem der Ansprüche 1 bis 4, **dadurch gekennzeichnet, dass** die Barriereschicht aus einer mittels Sputterverfahren erzeugten oxidischen oder nitridischen oder sulfidischen Schicht besteht.

7. Verpackungsteil nach einem der Ansprüche 1 bis 4, **dadurch gekennzeichnet, dass** die Barriereschicht aus einer mittels Sputterverfahren erzeugten metallischen Schicht aus Aluminium, Stahl, Kupfer, Zinn, Zink, Silber oder Mischungen davon, für Nicht-Sterilisationsanwendungen bevorzugt aus Aluminium, für Sterilisationsanwendungen bevorzugt aus Silber, Stahl, Zinn oder Zink, besteht.

8. Verpackungsteil nach einem der Ansprüche 1 bis 7, **dadurch gekennzeichnet, dass** der Überlack aus einem Lacksystem auf Basis von natürlichen Bindemitteln, gegebenenfalls vernetzt mit Vernetzerharzen, insbesondere Isocyanaten, Melamin- oder Harnstoffharzen, Silanen oder Metallalkoxiden, Polykondensationsharzen, Polyadditionsharzen, Polymerisationsharzen, insbesondere Sol-Gel-Lacke, Silicate und Silicone, besteht.

9. Verpackungsteil nach einem der Ansprüche 1 bis 7, **dadurch gekennzeichnet, dass** der Überlack zur Verbesserung der Sauerstoffbarriereeigenschaften und/oder sterilisationsbeständiger Eigenschaften aus einem Lack auf Basis von EVOH, PVDC, einem kationisch oder radikalisch UV-härtenden Lack oder einem Sol-Gel-Lack auf Basis von Alkoxysilanen und/oder Metallalkoxiden und/oder anorganischen Partikeln, gegebenenfalls vernetzt mit Vernetzerharzen, insbesondere Isocyanaten, Melamin- oder Harnstoffharzen, Silanen oder Metallalkoxiden, besteht.

10. Verpackungsteil nach einem der Ansprüche 1 bis 7, **dadurch gekennzeichnet, dass** der Überlack aus einem thermisch oder durch Strahlenhärtung, insbesondere durch UV-Licht oder Elektronenstrahlen, ausgehärteten Sol-Gel-Lacksystem oder Acrylatlack besteht.

11. Verpackungsteil nach einem der Ansprüche 1 bis 10 in der Form eines Behälters zur Aufnahme eines Füllgutes und/oder eines Verschlusses für einen Behälter.

12. Verfahren zur Herstellung eines Verpackungsteils mit guter Durchtrittssperrwirkung gegen Wasserdampf und Gase, wobei das Verpackungsteil aus einem Kunststoff geformt wird und die Durchtrittssperrwirkung gegen Wasserdampf und Gase nach dem Formen des Verpackungsteils in Form einer Beschichtung mit Materialien mit der gewünschten Durchtrittssperrwirkung im Vakuum erzeugt wird,
**dadurch gekennzeichnet, dass**
die Vakuumbeschichtung zum Schutz gegen Abrasion und Korrosion und zur Verbesserung der mechanischen Stabilität überlackiert wird.

13. Verfahren nach Anspruch 12, **dadurch gekennzeichnet, dass** der Behälter und gegebenenfalls der Verschluss aus Polyethylen (PE), Polypropylen (PP), Cycloolefincopolymer (COC), Cycloolefinpolymer (COP), Polyvinylchlorid (PVC), Polyethylenterephthalat (PET), Polyamid (PA) oder aus den genannten Werkstoffen hergestellten Laminaten geformt werden.

14. Verfahren nach Anspruch 12 oder 13, **dadurch gekennzeichnet, dass** das Formen des Behälters und gegebenenfalls des Verschlusses der Verpackung durch Thermoformen von Flachfolienmaterial, durch Spritzgiessen oder durch eine Kombination von Spritzguss und Blasformen (injection blowmolding) oder Extrusion und Blasformen (extrusion blowmolding) erfolgt.

15. Verfahren nach einem der Ansprüche 12 bis 14, **dadurch gekennzeichnet, dass** das Beschichten mittels Plasma-CVD mit keramischen Schichten, bevorzugt durch PECVD (Plasma Enhanced Chemical Vapour Deposition) mit HMDSO (Hexamethyldisiloxan) oder TEOS (Tetraethoxysilan), insbesondere mit Plasma-Vorbehandlung mit HMDSO und Sauerstoff, HMDSO und Stickstoff, TEOS und Sauerstoff oder TEOS und Stickstoff durchgeführt wird.

16. Verfahren nach einem der Ansprüche 12 bis 14, **dadurch gekennzeichnet, dass** das Beschichten mittels Sputterverfahren mit oxidischen oder nitridischen oder sulfidischen Schichten durchgeführt wird.

17. Verfahren nach einem der Ansprüche 12 bis 14, **dadurch gekennzeichnet, dass** das Beschichten mittels Sputterverfahren mit metallischen Schichten aus Aluminium, Stahl, Kupfer, Zinn, Zink, Silber oder Mischungen davon, für Nicht-Sterilisationsanwendungen bevorzugt aus Aluminium, für Sterilisationsanwendungen bevorzugt aus Silber, Stahl, Zinn oder Zink, durchgeführt wird.

18. Verfahren nach einem der Ansprüche 12 bis 17, **dadurch gekennzeichnet, dass** zum Überlackieren Lacksysteme auf Basis von natürlichen Bindemitteln, gegebenenfalls vernetzt mit Vernetzerharzen, insbesondere Isocyanaten, Melamin- oder Harnstoffharzen, Silanen oder Metallalkoxiden, Polykondensationsharzen, Polyadditionsharzen, Polymerisationsharzen, insbesondere Sol-Gel-Lacke, Silicate und Silicone, eingesetzt werden.

19. Verfahren nach einem der Ansprüche 12 bis 17, **dadurch gekennzeichnet, dass** zur Verbesserung der Sauerstoffbarriereeigenschaften und/oder sterilisationsbeständiger Eigenschaften zum Überlackieren Lacke auf Basis von EVOH, PVDC, kationisch oder radikalisch UV-härtende Lacke oder Sol-Gel-Lacke auf Basis von Alkoxysilanen und/oder Metallalkoxiden und/oder anorganischen Partikeln, gegebenenfalls vernetzt mit Vernetzerharzen, insbesondere Isocyanaten, Melamin- oder Harnstoffharzen, Silanen oder Metallalkoxiden, eingesetzt werden.

20. Verfahren nach einem der Ansprüche 12 bis 17, **dadurch gekennzeichnet, dass** zum Überlackieren Sol-Gel-Lacksysteme und Acrylatlacke eingesetzt werden und die Aushärtung thermisch oder durch Strahlenhärtung, insbesondere durch UV-Licht oder Elektronenstrahlen, durchgeführt wird.

21. Verfahren nach einem der Ansprüche 12 bis 20, **dadurch gekennzeichnet, dass** das Verpackungsteil ein Behälter zur Aufnahme eines Füllgutes und/oder ein Verschlusses für einen Behälter ist.

22. Verfahren nach einem der Ansprüche 12 bis 21, **dadurch gekennzeichnet, dass** die Herstellung des Verpackungsteils, das Beschichten und das Überlackieren in einer Linie durchgeführt werden.
